(19) Europäisches Patentamt
European Patent Office
Office européen des brevets

(11) **EP 3 659 826 B1**

(12) **EUROPEAN PATENT SPECIFICATION**

(45) Date of publication and mention
of the grant of the patent:
**01.06.2022   Bulletin 2022/22**

(21) Application number: **18837246.0**

(22) Date of filing: **26.06.2018**

(51) International Patent Classification (IPC):
**B60C 11/13** *(2006.01)*      **B60C 11/12** *(2006.01)*
**B60C 19/00** *(2006.01)*      **B60C 11/03** *(2006.01)*

(52) Cooperative Patent Classification (CPC):
**B60C 11/1281; B60C 11/1218; B60C 19/002;**
B60C 2011/0341; B60C 2011/1245;
B60C 2011/1254; B60C 2011/1268

(86) International application number:
**PCT/JP2018/024227**

(87) International publication number:
**WO 2019/021723 (31.01.2019 Gazette 2019/05)**

(54) **TIRE**

REIFEN

PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **27.07.2017   JP 2017145856**

(43) Date of publication of application:
**03.06.2020   Bulletin 2020/23**

(73) Proprietor: **Bridgestone Corporation**
**Chuo-Ku**
**Tokyo 104-8340 (JP)**

(72) Inventor: **HAYASHI, Shintaro**
**Tokyo 104-8340 (JP)**

(74) Representative: **Oxley, Robin John George**
**Marks & Clerk LLP**
**15 Fetter Lane**
**London EC4A 1BW (GB)**

(56) References cited:
**JP-A- H0 569 706        JP-A- 2011 143 898**
**JP-A- 2013 107 501      JP-A- 2013 539 735**
**JP-A- 2015 214 303**

**Description**

TECHNICAL FIELD

The present invention relates to a tire.

BACKGROUND

In recent years, along with higher performance of a vehicle, a ratio of noise caused by a tire rolling under a load to noise generated by a running car has increased, and reduction of the tire noise has been required. Above all, a tire noise of a high frequency, especially around 1000 Hz is a main cause for vehicle external noise, and also from a viewpoint of environmental problem, noise reduction measures are required.

This tire noise around 1000 Hz is mainly due to air column resonance sound. The air column resonance sound is noise generated by resonance of air in a tube surrounded by a circumferential groove extending continuously in a circumferential direction of a tread surface and a road surface, and in a general passenger vehicle, noise in a range of 800 to 1200 Hz is often observed. Such air column resonance sound has a high peak level and a broad frequency band, and therefore occupies a large part of noise generated from the tire.

Furthermore, human hearing is sensitive especially to a frequency band around 1000 Hz, and therefore reduction of the air column resonance sound is effective also for improvement of quietness in a feeling aspect during the running.

Here, as the tire in which the reduction of the air column resonance sound is desired, there are, for example, a tire in which a side branch type resonator including a vertical groove and a lateral groove is provided in a rib-like land portion defined by a plurality of circumferential grooves (Patent Literature 1), and a tire in which in the land portion, provided is Helmholtz type resonator including an air chamber that is open to a surface of the land portion at a position away from a circumferential groove, and one or more narrowed necks that communicate between the air chamber and the circumferential groove (Patent Literature 2). Attention is also drawn to the disclosure of JP2015-214303A.

CITATION LIST

Patent Literature

   PTL 1: Japanese Patent Laid-Open No. 2011-051529
   PTL2: Japanese Patent Laid-Open No. 2014-166827

SUMMARY

(Technical Problem)

In the above described side branch type and Helmholtz type resonators, it is necessary to provide grooves or recesses having large or complicated shapes in a land portion of a tread, and hence, there is concern that a rigidity distribution of the land portion becomes non-uniform, and uneven wear is caused.

To solve the problems, it is an object of the present invention to provide a tire that is capable of inhibiting uneven wear in a tread while reducing air column resonance sound.

(Solution to Problem)

(1) A tire of the present invention is a tire as claimed in claim 1.

Here, in the present description, "the tread surface" means an outer peripheral surface over an entire circumference of the tire which comes in contact with a road surface in a case where the tire attached to a rim and charged with a predetermined internal pressure is rolled in a state of being charged with a maximum load (hereinafter, referred to as "the maximum load state"), and "the tread ground contact edge" means a tire width direction edge of the tread surface.

Furthermore, an after-mentioned "reference state" described herein is a state where the tire is attached to the rim and charged with the predetermined internal pressure and no load.

The above "rim" indicates an approved rim in an applicable size (a measuring rim in Standards Manual of ETRTO (The European Tyre and Rim Technical Organisation), and a design rim in Year Book of TRA (The Tire and Rim Association, Inc.)) described or to be described in future in an industrial standard effective in a district where the tire is produced and used, for example, JATMA Year Book of JATMA (the Japan Automobile Tyre Manufacturers Association) in Japan, Standards Manual of ETRTO in Europe, Year Book of TRA in U.S. or the like (that is, the above "rim" also includes a size that can be included in the above industrial standard in future, in addition to the existing size. Examples of "the size to be described in future" include sizes described as "future developments" in 2013 edition of Standards Manual of ETRTO). However, it is considered that a rim having a size that is not described in the above industrial standard is a rim having a width corresponding to a bead width of the tire.

Additionally, "the predetermined internal pressure" indicates an air pressure (a maximum air pressure) corresponding to a maximum load capability of a single wheel in an applicable size and ply rating described in the above JATMA Year Book or the like. It is considered that a pressure having a size that is not described in the above industrial standard is an air pressure (the maximum air pressure) corresponding to the maximum load capability prescribed for each vehicle to which the tire is installed. Furthermore, "the maximum load" indicates a load corresponding to the above maximum load capability. Note that air mentioned here can be replaced with an inert gas such as a nitrogen gas or the like.

Furthermore, in the present description, "the groove width of the circumferential groove" indicates a length in a direction orthogonal to the extending direction of the circumferential groove which is measured in the above reference state. Similarly, widths such as "the groove width of the first width direction groove portion", "the groove width of the second width direction groove portion", "the opening width of the narrowed groove portion", and "a groove width of a third width direction groove portion" and "a sipe width of a circumferential sipe" described later refer to lengths in a direction orthogonal to an extending direction of the groove portion or the sipe which are measured in the reference state.

Note that for "the groove width of the circumferential groove", "the groove width of the first width direction groove portion", "the groove width of the second width direction groove portion" and the after-mentioned "groove width of the third width direction groove portion", in a case where the groove width changes along a groove depth direction and/or a groove extending direction, it is considered that a maximum width corresponds to the groove width unless conditions such as a measuring position in the depth direction or the extending direction and the like are especially designated.

Hereinafter, a dimension or the like of each element such as the groove is measured in the reference state (a dimension of each element in the tread surface or the like is measured on a developed view of the tread surface in the reference state) unless otherwise mentioned.

Furthermore, in the present description, "the sipe" indicates a narrow groove having a width to such an extent that at least a part of the sipe is closed in a case where the tire is rolled in the maximum load state.

(Advantageous Effect)

According to the present invention, there can be provided a tire that is capable of inhibiting uneven wear in a tread while reducing air column resonance sound.

BRIEF DESCRIPTION OF THE DRAWINGS

In the accompanying drawings:

FIG. 1 is a partially developed view schematically illustrating a part of a tread surface of a tire according to one embodiment of the present invention,

FIG. 2 is a partially developed view schematically illustrating an enlarged part of the tread surface of FIG. 1;

FIG. 3A is a cross-sectional view along the line I-I of FIG. 2 and FIG. 3B is a cross-sectional view along the line II-II of FIG. 2;

FIG. 4 is a partially developed view schematically illustrating an enlarged part of a tread surface of a tire according to another embodiment of the present invention,

FIG. 5 is a partially developed view schematically illustrating an enlarged part of a tread surface of a tire according to still another embodiment of the present invention,

FIG. 6 is a partially developed view schematically illustrating an enlarged part of a tread surface of a tire according to a further embodiment of the present invention

FIG. 7 is a partially developed view schematically illustrating a part of a tread surface of a tire according to a further embodiment of the present invention,

FIG. 8 is a partially developed view schematically illustrating an enlarged part of the tread surface of the tire according to the further embodiment of the present invention,

FIG. 9A is a cross-sectional view along the line III-III of FIG. 8 and FIG. 9B illustrates a modification; and

FIG. 10 is a partially developed view schematically illustrating an enlarged part of the tread surface, to explain a positional relation between respective groove portions or the like in the tire of FIG. 8.

DETAILED DESCRIPTION

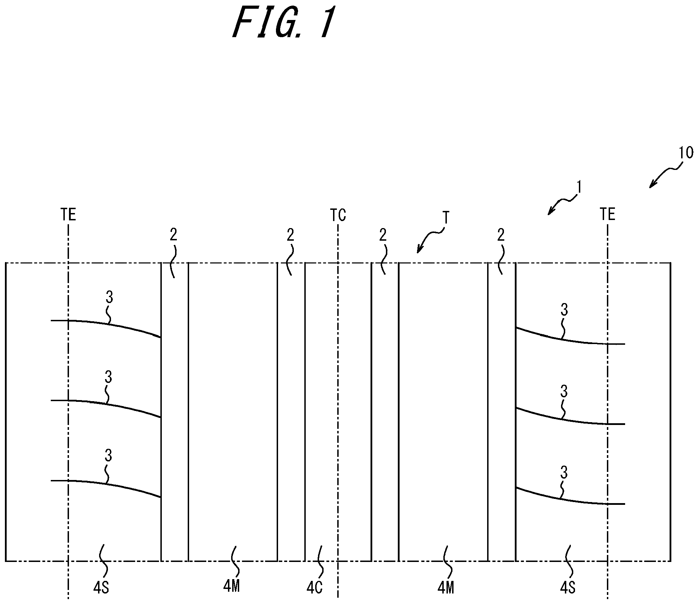

Hereinafter, embodiments of a tire according to the present invention will be illustrated and described with reference to the drawings. FIG. 1 is a partially developed view schematically illustrating a tread surface T of a tread 1 of a tire 10 according to one embodiment of the present invention. The tire 10 includes, in the tread surface T of the tread 1, at least one (four in an illustrated example) circumferential groove 2 extending continuously in a tire circumferential direction (extending along the tire circumferential direction, i.e., extending continuously in the tire circumferential direction at an angle of 0° to the tire circumferential direction in the illustrated example). The four circumferential grooves 2 and opposite tread ground contact edges TE define and form a center land portion 4C including a tire equatorial plane TC, two middle land portions 4M adjacent to opposite outer sides of the center land portion 4C in the tire width direction via the circumferential grooves 2, and two shoulder land portions 4S adjacent to opposite outer sides of the middle land portions 4M in the tire width direction via the circumferential grooves 2.

Note that the circumferential groove 2 in the present embodiment is a linear groove extending along the tire circumferential direction and continuously in the tire circumferential direction, but in the tire of the present disclosure, the circumferential groove 2 may be a zigzag-shaped or wavy-shaped groove inclined to the tire circumferential direction (the tire equatorial plane TC) and extending continuously in the tire circumferential direction.

Furthermore, in the tire of the present invention, at least one circumferential groove 2 may be provided, and in the present embodiment, four circumferential grooves are provided, but this example is not restrictive. It is preferable to provide a plurality of circumferential grooves. In case of the plurality of circumferential grooves, two, three, five or more grooves may be provided.

As described above, the tire 10 according to the present embodiment includes, in the tread surface T, at least one circumferential groove 2 extending continuously in the tire circumferential direction, and the shoulder land portions 4S defined by the circumferential grooves 2 and the tread ground contact edges TE.

Note that the tire 10 according to the present embodiment is a pneumatic radial tire for a passenger vehicle, but the present disclosure is also applicable to a type of tire other than this tire, in which reduction of air column resonance sound is required. Furthermore, in the tire 10 according to the present embodiment, there are not any special restrictions on an internal structure of the tire.

The shoulder land portion 4S in the present embodiment includes a plurality of width direction grooves 3 (the illustrated example illustrates three of the grooves) that extend in the tire width direction, communicate between the circumferential groove 2 and the tread ground contact edge TE, and arranged away from each other in the tire circumferential direction in the present embodiment, and in the shoulder land portion 4S, a plurality of block-shaped land portions are formed in the tire circumferential direction by the width direction grooves 3.

Note that the width direction groove 3 in the present embodiment is inclined to the tire width direction and extends in an arc shape between the circumferential groove 2 and the tread ground contact edge TE.

However, the width direction groove according to the present invention is not limited to this example and, for example, the width direction groove may extend along the tire width direction, and the width direction groove may be linear, as long as the width direction groove 3 includes a tire width direction component.

Furthermore, in the present embodiment, the width direction grooves 3 in the opposite shoulder land portions 4S are arranged in a point symmetric manner about an optional point on the tire equatorial plane TC in the drawing, at positions almost linearly symmetrically with each other relative to the tire equatorial plane TC. That is, in the shoulder land portion 4S on one side (a paper surface right side) of the tire equatorial plane TC, each of the width direction grooves 3 extends in an arc shape having a center of an arc on one side (a paper surface upper side) in the tire circumferential direction of the width direction groove 3. In the shoulder land portion 4S on the other side (a paper surface left side) of the tire equatorial plane TC, each of the width direction grooves 3 extends in an arc shape having a center of an arc on the other side (a paper surface lower side) in the tire circumferential direction of the width direction groove 3. The tire 10 according to the present embodiment is a tire that can be installed in any tire rotation direction or any installing direction to the vehicle.

However, the width direction grooves 3 according to the present invention can be arranged in either linear symmetry or point symmetry to the tire equatorial plane TC, or do not have to be arranged in the linear symmetry or the point symmetry to the tire equatorial plane TC.

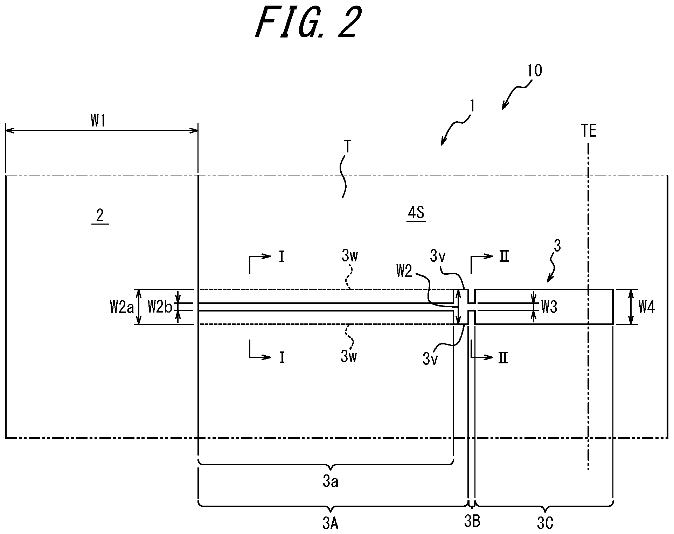

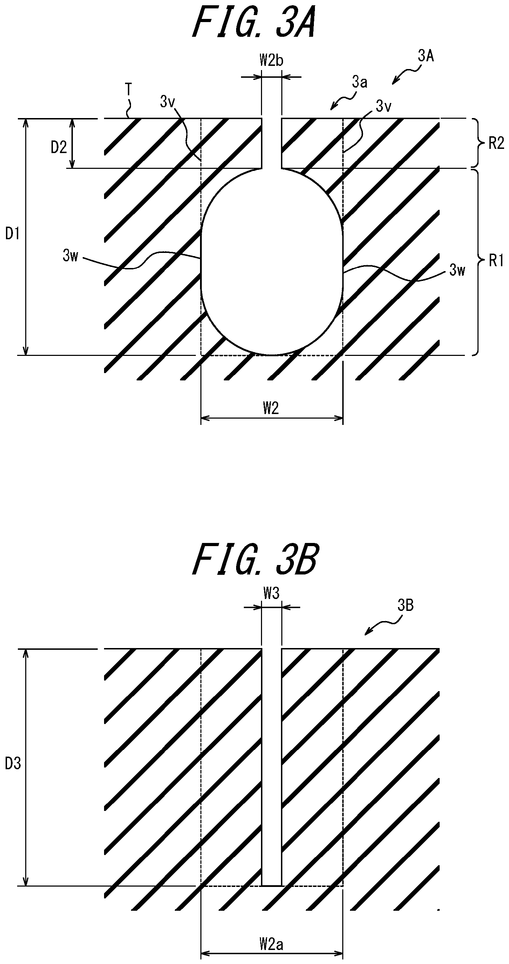

Next, the width direction grooves 3 will be described in detail with reference to FIG. 2 and FIGS. 3A and 3B.

FIG. 2 is a partially developed view schematically illustrating an enlarged part of the tread surface T illustrated in FIG. 1. Specifically, in the example of FIG. 1, all the width direction grooves 3 in each of the opposite shoulder land portions 4S have a similar configuration. However, FIG. 2 schematically illustrates one of the plurality of width direction grooves 3 formed in the tread surface T of the tread 1 of FIG. 1, in an enlarged manner. Furthermore, FIGS. 3A and 3B are cross-sectional views along the line I-I and the line II-II of FIG. 2, respectively, and illustrate a cross section of the width direction groove 3 by a surface of the width direction groove 3 which is orthogonal to an extending direction.

Note that as described above, the width direction groove 3 according to the present embodiment is inclined to the tire width direction and extends in the arc shape, and it is schematically illustrated here for explanation that the width direction groove 3 linearly extends along the tire width direction.

As illustrated in FIG. 2, the width direction groove 3 in the present embodiment comprises a first width direction groove portion 3A that is narrower than the circumferential groove 2 and communicates with the circumferential groove 2, a second width direction groove portion 3B that is adjacent to and continuous with a tread ground contact edge TE side of the first width direction groove portion 3A and is narrower than the first width direction groove portion 3A, and a third width direction groove portion 3C that is adjacent to and continuous with a tread ground contact edge TE side of the second width direction groove portion 3B and communicates with the tread ground contact edge TE.

The first width direction groove portion 3A in the present embodiment includes a narrowed groove portion 3a having an opening width W2b in the tread surface T that is smaller than a groove width W2a on a groove bottom side (which is equal to a groove width W2 of the first width direction groove portion 3A in the present embodiment), in a region of at least a part of the first width direction groove portion 3A in an extending direction of the first width direction groove portion 3A.

That is, the first width direction groove portion 3A in the present embodiment has an equal groove width over an entire length of the first width direction groove portion 3A on the groove bottom side, but has, at an opening end position, a region having a comparatively small opening width to the tread surface T in the region of at least the part of the first width direction groove portion 3A in the extending direction of the first width direction groove portion 3A. The region is referred to as the narrowed groove portion 3a. FIG. 2 illustrates a groove wall 3w on the groove bottom side of the narrowed groove portion 3a with a broken line, and illustrates an opening end of the narrowed groove portion 3a in the tread surface T with a solid line.

Note that in the present embodiment, the narrowed groove portion 3a extends continuously in a region over an almost entire length of the first width direction groove portion 3A, more specifically in a region from an end of the first width direction groove portion 3A on a circumferential groove 2 side to a position of 90% or more of an extending length of the first width direction groove portion 3A. That is, an extending length of the narrowed groove portion 3a is 90% or more of the extending length of the first width direction groove portion 3A.

However, the narrowed groove portion 3a may be only formed in the region of at least the part of the first width direction groove portion 3A in the extending direction of the first width direction groove portion 3A, and the extending length is not limited. The extending length of the narrowed groove portion 3a is preferably 50% or more, 60% or more, or 70% or more, more preferably 80% or more, and most preferably 100% of the extending length of the first width direction groove portion 3A. Alternatively, the percentage may be less than 50%.

Furthermore, the narrowed groove portion 3a may be continuous or discontinuous, and may be, for example, divided into two, three or more and extend discontinuously.

As illustrated in a cross section of the narrowed groove portion 3a by a surface of the width direction groove 3 which is orthogonal to the extending direction in FIG. 3A, the narrowed groove portion 3a in the present embodiment has the groove width W2a of the comparatively large width (equal to the groove width W2 of the first width direction groove portion 3A in the present embodiment) on the groove bottom side of the narrowed groove portion 3a, while the narrowed groove portion has the opening width W2b smaller than the groove width W2a, at an opening end position of the narrowed groove portion 3a in the tread surface T. Note that FIG. 3 illustrates a groove wall 3v of a portion other than the narrowed groove portion 3a in the first width direction groove portion 3A with a broken line.

More specifically, the narrowed groove portion 3a in the present embodiment includes a groove bottom side region R1 having the groove width W2a of the comparatively large width on the groove bottom side of the narrowed groove portion 3a, and an opening end region R2 disposed on an outer side of the groove bottom side region R1 in the tire radial direction to extend to the tread surface T and having a width smaller than the groove width W2a of the groove bottom side region R1 (which is equal to the opening width W2b in the present embodiment).

In the present embodiment, at a tire radially outer end of the groove bottom side region R1 having the groove width W2a of the comparatively large width, the groove width gradually decreases from an inner side toward an outer side in the tire radial direction. Thus, the outer end is connected to the opening end region R2 having the groove width of the comparatively small width.

Note that the groove width W2a of the groove bottom side region R1 in the present embodiment is equal to the groove width of the portion other than the narrowed groove portion 3a in the first width direction groove portion 3A (the groove width W2 of the first width direction groove portion 3A), but the groove width W2a of the groove bottom side region R1 may be smaller and/or larger than the groove width of the portion other than the narrowed groove portion 3a in the first width direction groove portion 3A.

Furthermore, the opening end region R2 in the present embodiment extends from an inner end to an outer end of the opening end region R2 in the tire radial direction with a constant groove width. The opening end region R2 is located at an almost center of the groove width of the narrowed groove portion 3a, and extends along a normal line direction of the tread surface T.

Note that in the opening end region R2 in the present embodiment, the groove width is constant over the tire radial direction (equal to the opening width W2b over the tire radial direction), but the groove width may vary to gradually decrease or gradually increase from the inner side toward the outer side in the tire radial direction. However, it is preferable that the groove width in the opening end region R2 is constant over the tire radial direction, because a block of the shoulder land portion 4S can be inhibited from collapsing during vehicle running.

However, a cross-sectional shape of the narrowed groove portion 3a is not limited to the above example, and may have, for example, an entirely triangular shape with a tread surface T side having an apex. Alternatively, the groove bottom side region R1 may have a symmetrically pentagonal shape or the like with an opening end region R2 side having an apex.

Furthermore, as illustrated in a cross section of the second width direction groove portion 3B in the present embodiment by a surface of the width direction groove 3 which is orthogonal to the extending direction in FIG. 3B, the second width direction groove portion 3B has a groove width W3 smaller than the groove width W2 of the width direction groove 3 over the tire radial direction.

Note that the groove width W3 of the second width direction groove portion 3B in the present embodiment is constant over the tire radial direction, but the groove width W3 may vary to gradually decrease or gradually increase from the inner side toward the outer side in the tire radial direction. Furthermore, a groove depth D3 of the second width direction groove portion 3B in the present embodiment is equal to a groove depth (i.e., a groove depth of the narrowed groove portion 3a) D1 of the first width direction groove portion 3A, but the groove depth D3 of the second width direction groove portion 3B may be smaller than the groove depth D1 of the first width direction groove portion 3A.

Note that in this example, each of the groove depth D1 of the first width direction groove portion 3A and the groove depth D3 of the second width direction groove portion 3B is constant.

As described above, the tire 10 according to the present embodiment includes, in the tread surface T, at least one (four in the present embodiment) circumferential groove 2 extending continuously in the tire circumferential direction, and the shoulder land portion 4S defined by the outermost circumferential groove 2 in the tire width direction and the tread ground contact edge TE, and the shoulder land portion 4S includes the width direction grooves 3 that extend in the tire width direction and communicate between the circumferential groove 2 and tread ground contact edge TE. The width direction groove 3 includes the first width direction groove portion 3A that communicates with the circumferential groove 2, and the second width direction groove portion 3B adjacent to and continuous with the tread ground contact edge TE side of the first width direction groove portion 3A. The first width direction groove portion 3A includes the narrowed groove portion 3a having the opening width W2b in the tread surface T that is smaller than the groove width W2a on the groove bottom side (which is equal to the groove width W2 of the width direction groove 3 in the present embodiment), in the region of at least the part of the first width direction groove portion 3A in the extending direction of the first width direction groove portion 3A. A groove width W1 and the groove widths W2 and W3 of the circumferential groove 2, the first width direction groove portion 3A and the second width direction groove portion 3B satisfy a relational expression (1) as follows.

The groove width W1 of the circumferential groove 2 > the groove width W2 of the first width direction groove portion 3A > the groove width W3 of the second width direction groove portion 3B ... (1)

In the tire 10 of the present embodiment, the width direction groove 3 provided in the shoulder land portion 4S that communicates between the circumferential groove 2 and the tread ground contact edge TE comprises the first width direction groove portion 3A including the narrowed groove portion 3a, and the second width direction groove portion 3B. Furthermore, the groove width W1 of the circumferential groove 2, the groove width W2 of the first width direction groove portion 3A and the groove width W3 of the second width direction groove portion 3B satisfy the above relational expression (1). Consequently, it is possible to inhibit uneven wear in the tread while reducing air column resonance sound.

Specifically, first, the width direction groove 3 is provided that connects the circumferential groove 2 to the tread ground contact edge TE and has the groove width W2 smaller than the groove width W1 of the circumferential groove 2. Consequently, a frequency of the air column resonance sound generated in the circumferential groove 2 during the vehicle running can be shifted to a high frequency band and noise of the whole tire can be reduced (can be hard to feel harsh). Particularly in a case where a plurality of circumferential grooves 2 are provided in the tread 1 as in the tire 10 according to the present embodiment, the frequency of the air column resonance sound varies with the circumferential groove 2 connected to the width direction groove 3 and the circumferential groove 2 that is not connected to the width direction groove 3. Thus, the frequency of the resonance sound generated from the circumferential groove 2 is dispersed, so that the noise caused by the air column resonance sound can be reduced (can be hard to feel harsh).

Furthermore, in the tire 10 of the present embodiment, provided is the second width direction groove portion 3B adjacent to the tire width direction outer side of the first width direction groove portion 3A of the width direction groove 3 which communicates with the circumferential groove 2, and having the groove width W3 smaller than the groove width W2 of the first width direction groove portion 3A. Consequently, the air column resonance sound can be reduced by the second width direction groove portion 3B.

That is, air (sound waves) flowing into the circumferential groove 2 and passing through the circumferential groove 2 during the vehicle running moves outwardly in the tire width direction via the width direction groove 3 connected to the circumferential groove 2, but the groove width W3 of the second width direction groove portion 3B is smaller than the groove width W2 of the first width direction groove portion 3A. Consequently, kinetic energy of air is converted into thermal energy by viscous friction in a case where air passes the second width direction groove portion 3B (friction generated by throttling air flow in the second width direction groove portion 3B), and this thermal energy is released to outside, or absorbed by the groove wall, a groove bottom or the like of the second width direction groove portion 3B, so that the air column resonance sound is reduced.

Thus, in the tire 10 of the present embodiment, the air column resonance sound can be reduced by utilizing an attenuation effect of the sound waves by viscosity of air in the second width direction groove portion 3B (especially at an inlet and an outlet of the second width direction groove portion 3B).

As described above, in the tire 10 of the present embodiment, the air column resonance sound can be reduced by providing the width direction grooves 3 that satisfy the above described relational expression (1) in the shoulder land portions 4S, without providing, in the shoulder land portions 4S, any grooves or recesses having large or complicated shapes as in a conventional branch or Helmholtz type resonator. In other words, according to the tire 10 of the present embodiment, the air column resonance sound is reduced, but rigidity of the land portion of the tread is hard to be non-uniform, and hence, the uneven wear in the tread surface T can be inhibited. Furthermore, it is possible to maintain a degree of freedom in design of the tread.

Furthermore, in the tire 10 of the present embodiment, the region of at least a part of the first width direction groove portion 3A of the width direction groove 3 that communicates with the circumferential groove 2 includes the narrowed groove portion 3a having an opening width W2b in the tread surface T which is smaller than the groove width W2a on the groove bottom side. Consequently, during ground contact of the tire, the width direction groove 3 is easier to be closed at an opening end of the narrowed groove portion 3a, and the groove walls that define the narrowed groove portion 3a support one another. Therefore, if the width direction groove 3 (the first width direction groove portion 3A) is provided in the shoulder land portion 4S, the rigidity (especially, shearing rigidity) of the shoulder land portion 4S can be more suitably maintained. As a result, for example, uneven wear such as heel and toe wear in the tread surface T can be more securely inhibited, and a handling performance can be inhibited from lowering.

However, in the present embodiment, another resonator may be provided in the center land portion 4C and/or the middle land portion 4M.

Note that it is preferable in the present embodiment that a ratio (W2/W1) of the groove width W2 of the first width direction groove portion 3A to the groove width W1 of the circumferential groove 2 is 0.1 or more and 0.5 or less.

If the ratio is 0.1 or more, a sufficient amount of air can be sent to the width direction groove 3, and hence, the air column resonance sound can be further reduced. Furthermore, if the ratio is 0.5 or less, the air flowing through the circumferential groove 2 can be sufficiently throttled in the first width direction groove portion 3A of the width direction groove 3, and the air can be sent to the second width direction groove portion 3B at a comparatively high rate. Consequently, the air column resonance sound can be further reduced. Additionally, if the ratio is 0.5 or less, the uneven wear of the tread can be more securely inhibited.

It is further preferable that the ratio is 0.2 or more and 0.4 or less for similar reasons.

Furthermore, it is preferable in the present embodiment that a ratio (W3/W2) of the groove width W3 of the second width direction groove portion 3B to the groove width W2 of the first width direction groove portion 3A is 0.1 or more and 0.8 or less.

If the ratio is 0.1 or more, a sufficient amount of air can be sent to the second width direction groove portion 3B, and hence, the air column resonance sound can be further reduced. Furthermore, if the ratio is 0.8 or less, the air flowing through the first width direction groove portion 3A can be sufficiently throttled in the second width direction groove portion 3B, and the air column resonance sound can be further reduced.

It is further preferable that the ratio is 0.2 or more and 0.6 or less for similar reasons.

Furthermore, it is preferable that a ratio of a cross-sectional area of the second width direction groove portion 3B to a cross-sectional area of the first width direction groove portion 3A (the cross-sectional area of the second width direction groove portion 3B/the cross-sectional area of the first width direction groove portion 3A) is 0.08 or more and 0.80 or less.

If the ratio is 0.08 times or more, the sufficient amount of air passes through the second width direction groove portion 3B, and the sufficient attenuation effect can be obtained in the second width direction groove portion 3B. Consequently, the air column resonance sound can be further reduced. Furthermore, if the ratio is 0.8 times or less, the air can be sufficiently throttled in the second width direction groove portion 3B, and the attenuation effect in the second width direction groove portion 3 increases. Consequently, the air column resonance sound can be further reduced.

From a viewpoint of further reducing the air column resonance sound, it is preferable that the cross-sectional area of the second width direction groove portion 3B is 0.5 times or less the cross-sectional area of the first width direction groove portion 3A. The reason is that if the ratio is 0.5 times or less, the attenuation effect of the sound waves in the second width direction groove portion 3B increases, and the air column resonance sound can be further reduced. For similar reasons, it is further preferable that the cross-sectional area of the second width direction groove portion 3B is 0.4 times or less of the cross-sectional area of the first width direction groove 2.

Note that in a case where the cross-sectional area of the second width direction groove portion 3B changes along an extending direction of the second width direction groove portion 3B, it is considered that the cross-sectional area of the second width direction groove portion 3B at a boundary position between the second width direction groove portion 3B and the first width direction groove portion 3A that communicates with the second width direction groove portion 3B is the cross-sectional area of the second width direction groove portion 3B. In a case where the cross-sectional area of the first width direction groove portion 3A changes along an extending direction of the first width direction groove portion 3A, a maximum cross-sectional area of the first width direction groove portion 3A is the cross-sectional area thereof.

Note that the groove width W2 of the first width direction groove portion 3A and the groove width W3 of the second width direction groove portion 3B may change continuously and smoothly at a boundary position between both grooves. However, from a viewpoint of increasing a reduction effect of the air column resonance sound, it is preferable that the change at the boundary position between both the grooves is not continuous or smooth. However, from the viewpoint of increasing the reduction effect of the air column resonance sound, it is especially preferable that the groove width W2 of the first width direction groove portion 3A and the groove width W3 of the second width direction groove portion 3B intermittently change at the boundary position between both the grooves as in the present embodiment (at the boundary position (in an interface), the groove width W2 of the first width direction groove portion 3A is different from the groove width W3 of the second width direction groove portion 3B).

Furthermore, it is preferable in the present embodiment that the groove width W2 of the first width direction groove portion 3A is 1.5 mm or more and 3.0 mm or less.

If the width is 1.5 mm or more, the sufficient amount of air can be sent to the width direction groove 3, and hence, the air column resonance sound can be further reduced. If the width is 3.0 mm or less, excessive drop in rigidity of the shoulder land portion 4S can be avoided, and uneven wear such as the heel and toe wear can be more securely inhibited. Additionally, drop in handling performance can be more securely inhibited.

Note that in this example, as described above, the groove width W2 of the first width direction groove portion 3A is equal to the groove width (the groove width on the groove bottom side) W2a of the narrowed groove portion 3a of the first width direction groove portion 3A.

It is also preferable in the present embodiment that the groove width (the groove width of the groove bottom side region R1) W2a on the groove bottom side of the narrowed groove portion 3a of the first width direction groove portion 3A is 1.5 mm or more and 3.0 mm or less.

If the width is 1.5 mm or more, a groove space can be acquired also during ground contact of the tire, and air or rainwater can also pass through the groove bottom side of the narrowed groove portion 3a (the groove bottom side region R1). If the width is 3.0 mm or less, the excessive drop in rigidity of the shoulder land portion 4S can be avoided, and the uneven wear can be more securely inhibited. Additionally, drop in handling performance can be more securely inhibited.

It is also preferable in the present embodiment that the opening width (a groove width of the opening end region R2) W2b of the narrowed groove portion 3a of the first width direction groove portion 3A is 0.2 mm or more and 1.0 mm or less.

If the width is 0.2 mm or more, it is easy to pull out a mold that molds the narrowed groove portion 3a of the width direction groove 3 during tire manufacturing. If the width is 1.0 mm or less, the opening end of the narrowed groove portion 3a of the width direction groove 3 is easier to be closed during the ground contact of the tire. Furthermore, the groove walls that define the narrowed groove portion 3a support one another, and hence, the rigidity (especially the shearing rigidity) of the shoulder land portion 4S can be more suitably maintained.

Furthermore, it is preferable in the present embodiment that a groove depth D2 of the opening end region R2 in the narrowed groove portion 3a of the first width direction groove portion 3A (a length of the tread surface T along a normal line direction) is 1.0 mm or more and 4.0 mm or less.

If the depth is 1.0 mm or more, the rigidity in the opening end region R2 can be more suitably acquired. Furthermore, if the depth is 4.0 mm or less, the groove depth D1 of the comparatively wide groove bottom side region R1 can be sufficiently provided, and the sufficient amount of air can be sent to the narrowed groove portion 3a.

Note that the groove depth D1 of the groove bottom side region R1 can be optionally set in accordance with the groove depth of the first width direction groove portion 3A, the groove depth D2 of the opening end region R2 in the narrowed groove portion 3a of the first width direction groove portion 3A or the like.

Note that the groove depth D3 of the second width direction groove portion 3B can be smaller than the groove depth D1 of the first width direction groove portion 3A. The attenuation effect of the sound waves by the viscosity increases, and the air column resonance sound can be further reduced.

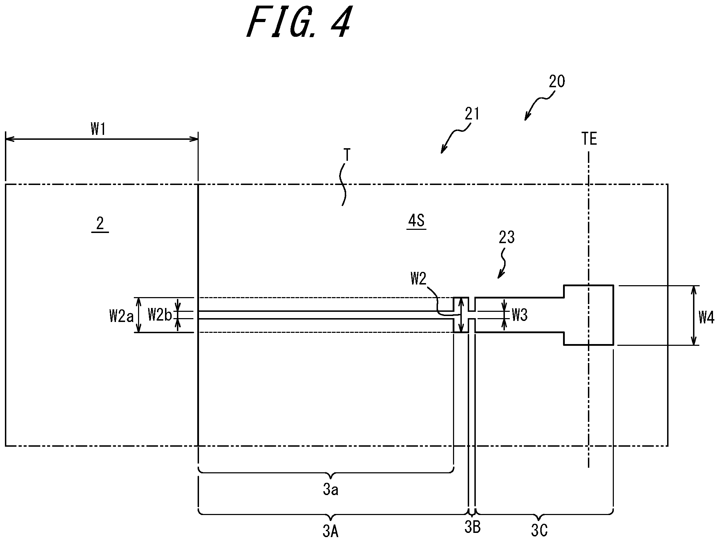

FIG. 4 is a partially developed view schematically illustrating an enlarged part of a tread surface T of a tread 21 in a tire 20 according to another embodiment of the present disclosure. Specifically, there is schematically illustrated one of a plurality of width direction grooves 23 formed in the tread surface T in an enlarged manner. The tire 20 has a tread pattern similar to that of the tire 10 according to the above described embodiment illustrated in FIG. 1. Therefore, a configuration similar to that of the above described embodiment is denoted with the same reference signs, and description is omitted.

In the present embodiment, the width direction groove 23 includes a third width direction groove portion 3C that is adjacent to and continuous with a tread ground contact edge TE side of a second width direction groove portion 3B, and communicates with the tread ground contact edge TE. A groove width W4 of the third width direction groove portion 3C is larger than a groove width W3 of the second width direction groove portion 3B. That is, the respective groove widths W3 and W4 of the second width direction groove portion 3B and the third width direction groove portion 3C satisfy a relational expression (3) as follows:

$$\text{the groove width W4 of the third width direction groove portion 3C}$$
$$> \text{the groove width W3 of the second width direction groove portion 3B} \ldots$$
$$(3).$$

Furthermore, the groove width W4 of the third width direction groove portion 3C is larger than a groove width W2 of a first width direction groove portion 3A. That is, the respective groove widths W2 and W4 of the first width direction groove portion 3A and the third width direction groove portion 3C satisfy a relational expression (4) as follows:

$$\text{the groove width W4 of the third width direction groove portion 3C}$$
$$> \text{the groove width W2 of the first width direction groove portion 3A} \ldots (4).$$

According to a configuration that satisfies the relational expression (3) and/or (4), air passing through a width direction groove 3 is efficiently exhausted to an outer side of the tread ground contact edge TE in a tire width direction, and air is efficiently taken into the width direction groove 3 from a circumferential groove 2. Consequently, air column resonance sound can be further reduced.

Note that the third width direction groove portion 3C in the tire 20 comprises a portion having the same groove width as the groove width W2 of the first width direction groove portion 3A on an inner side in the tire width direction, more specifically in a region on an inner side of the tread ground contact edge TE in the tire width direction. The third width direction groove portion has the groove width W4 larger than the groove width W2 of the first width direction groove portion 3A on an outer side in the tire width direction, more specifically in a region on the outer side in the tire width direction which includes the tread ground contact edge TE.

In this way, the third width direction groove portion 3C may have, in a part of the third width direction groove portion 3C, a groove width equal to the groove width W2 of the first width direction groove portion 3A. Furthermore, it is preferable that the groove width at a position of the tread ground contact edge TE is larger than the groove width W2 of the first width direction groove portion 3A.

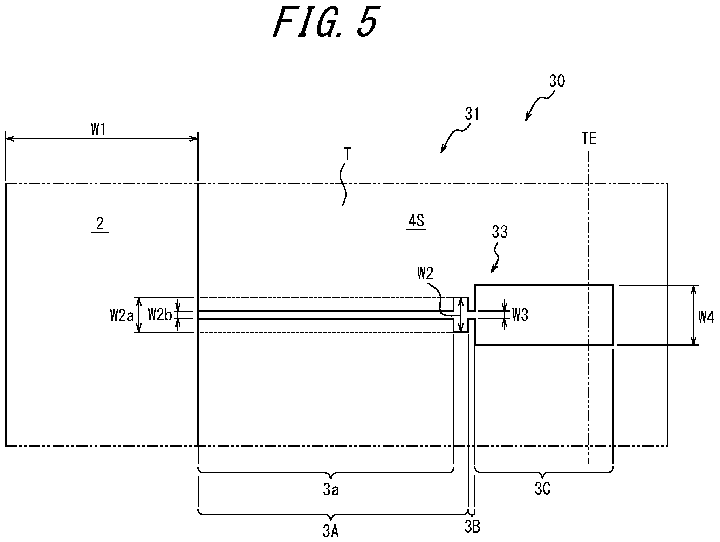

Furthermore, FIG. 5 is a partially developed view schematically illustrating an enlarged part of a tread surface T of a tread 31 in a tire 30 according to still another embodiment of the present invention.

Specifically, there is schematically illustrated one of a plurality of width direction grooves 33 formed in the tread surface T in an enlarged manner. The tire 30 has a tread pattern similar to that of the tire 10 according to the above described embodiment illustrated in FIG. 1. Therefore, a configuration similar to that of the above described embodiment is denoted with the same reference signs, and description is omitted.

For a third width direction groove portion 3C in the present embodiment, a groove width W4 of the third width direction groove portion 3C is larger than a groove width W2 of a first width direction groove portion 3A over an entire length of the third width direction groove portion 3C.

According to this configuration, air passing through a width direction groove 3 is further efficiently exhausted to an outer side of a tread ground contact edge TE in a tire width direction, and air is further efficiently taken into the width direction groove 3 from a circumferential groove 2. Consequently, air column resonance sound can be further reduced.

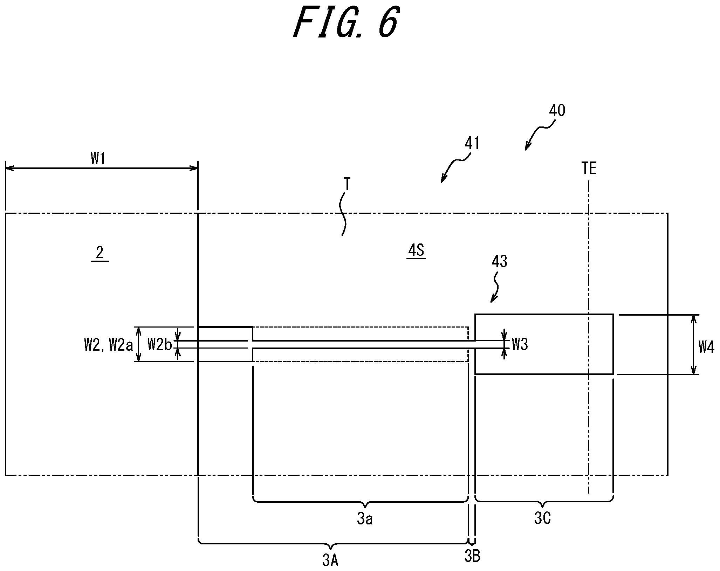

Furthermore, FIG. 6 is a partially developed view schematically illustrating an enlarged part of a tread surface T of a tread 41 in a tire 40 according to a further embodiment of the present disclosure. Specifically, there is schematically illustrated one of a plurality of width direction grooves 43 formed in the tread surface T in an enlarged manner. The tire 40 has a tread pattern similar to that of the tire 10 according to the above described embodiment illustrated in FIG. 1. Therefore, a configuration similar to that of the above described embodiment is denoted with the same reference signs, and description is omitted.

For a first width direction groove portion 3A in the present embodiment, as illustrated in FIG. 6, a narrowed groove portion 3a formed in the first width direction groove portion 3A is provided adjacent to a second width direction groove portion 3B. Furthermore, the narrowed groove portion 3a formed in the first width direction groove portion 3A is provided away from an inner end of a width direction groove 3 in a tire width direction.

The narrowed groove portion 3a may be provided away from both of the second width direction groove portion 3B and the inner end of the width direction groove 3 in the tire width direction.

Thus, in the present invention, the narrowed groove portion 3a formed in the first width direction groove portion 3A can be provided at an optional position of the first width direction groove portion 3A as long as the portion is formed in at least a part of the first width direction groove portion 3A.

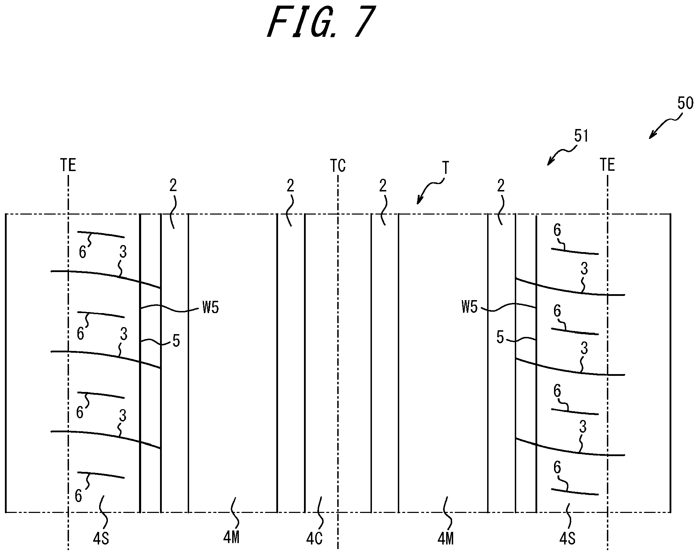

FIG. 7 is a partially developed view schematically illustrating a tread surface T of a tread 51 in a tire 50 according to a further embodiment of the present invention. A configuration similar to that of the above described embodiment is denoted with the same reference signs, and description is omitted.

The tire 50 according to the present embodiment further comprises, in a shoulder land portion 4S, at least one circumferential sipe 5 extending in a tire circumferential direction (in the present embodiment, extending along the tire circumferential direction, i.e., extending continuously in the tire circumferential direction at an angle of 0° to the tire circumferential direction).

In this way, the circumferential sipe 5 is provided in the shoulder land portion 4S. In this case, a block rigidity of the shoulder land portion 4S appropriately drops, and hence, pattern noise of the tire can be suppressed.

Furthermore, in the circumferential sipe 5, a sipe width W5 of the circumferential sipe 5, and respective groove widths W2 and W3 of a first width direction groove portion 3A and a second width direction groove portion 3B satisfy a relational expression (2) as follows:

$$\text{the groove width W2 of the first width direction groove portion 3A}$$
$$> \text{the sipe width W5 of the circumferential sipe 5} > \text{the groove width W3 of}$$
$$\text{the second width direction groove portion 3B} \dots (2).$$

The sipe width W5 of the circumferential sipe 5 is smaller than the groove width W2 of the first width direction groove portion 3A, so that excessive drop in block rigidity of the shoulder land portion 4S can be inhibited. Furthermore, the sipe width W5 of the circumferential sipe 5 is larger than the groove width W3 of the second width direction groove portion 3B, thereby more appropriately decreasing the rigidity of the shoulder land portion 4S. Consequently, pattern noise of the tire can be more securely reduced. Furthermore, since the rigidity of the shoulder land portion 4S appropriately decreases, ride comfort during the vehicle running improves.

Furthermore, as illustrated in FIG. 7, in a case where the circumferential sipe 5 intersects the first width direction groove portion 3A (the first width direction groove portion 3A has an intersecting portion E that intersects the circumferential sipe 5), the sipe width W5 of the circumferential sipe 5 is set to be smaller than the groove width W2 of the first width direction groove portion 3A. Consequently, air passing through the first width direction groove portion 3A can be inhibited from being distributed to the circumferential sipe 5. The air flowing through the first width direction groove portion 3A is securely passed through the second width direction groove portion 3B without being distributed to the circumferential sipe 5, so that air column resonance sound can be further reduced.

Note that in the case where the first width direction groove portion 3A has the intersecting portion E that intersects the circumferential sipe 5, it is preferable that at least a part of a groove bottom of the intersecting portion E is raised.

In this case, excessive drop in land portion rigidity in the intersecting portion E can be avoided, and hence, uneven wear in the shoulder land portion 4S can be more securely inhibited.

Note that the intersecting portion E mentioned herein means a region where a groove bottom surface of the first width direction groove portion 3A overlaps with a groove bottom surface of the circumferential sipe 5.

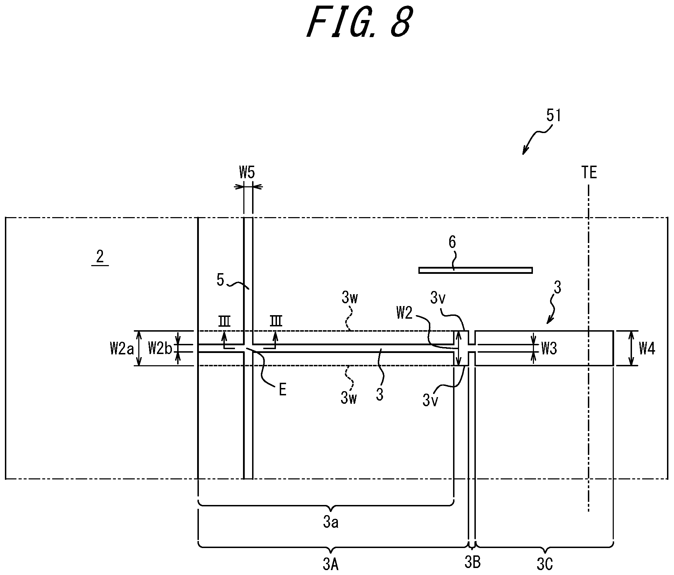

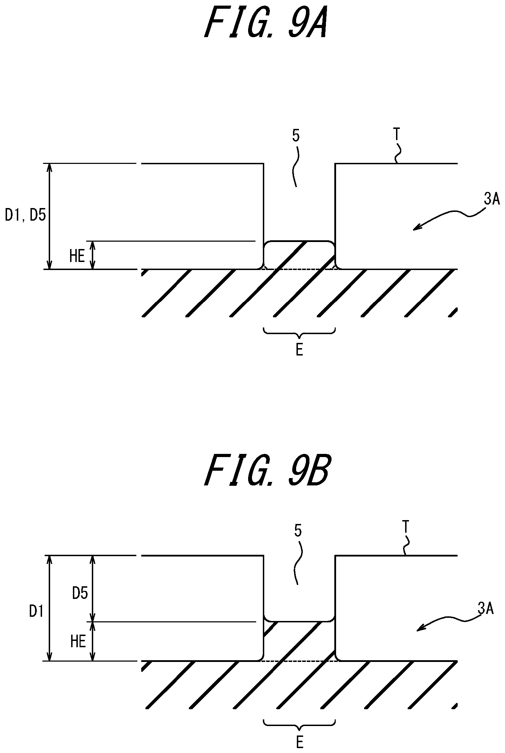

An example of the intersecting portion E will be described with reference to FIG. 9. FIG. 9A is a cross-sectional view along the line III-III of FIG. 8 and FIG. 9B illustrates a modification.

In FIG. 9A, a groove depth D1 of the first width direction groove portion 3A (i.e., a groove depth of a narrowed groove portion 3a) is the same as a groove depth D5 of the circumferential sipe 5. In this case, as illustrated, it is preferable that a groove bottom of the first width direction groove portion 3A is raised, for example, as much as an optional height HE of 1/2 or less of the groove depth D1 of the first width direction groove portion 3A in at least a part of the intersecting portion E, more suitably over an entire region of the intersecting portion E.

Furthermore, FIG. 9B illustrates an example where the groove depth D5 of the circumferential sipe 5 is smaller than the groove depth D1 of the first width direction groove portion 3A. In this case, the groove bottom in the intersecting portion E can be raised as much as the height HE (HE = D1-D5) so that the groove depth of the first width direction groove portion 3A in the intersecting portion E is equal to the groove depth D5 of the circumferential sipe 5.

Although not illustrated, the circumferential sipe 5 may extend intermittently in a tire circumferential direction. In this case, the circumferential sipe 5 may be disposed between respective width direction grooves 3 among a plurality of width direction grooves provided in a shoulder land portion 4S so that opposite ends of the circumferential sipe 5 terminate in the shoulder land portion 4S, or the circumferential sipe may be disposed so that one end of the circumferential sipe 5 is connected to the first width direction groove portion 3A. Alternatively, the circumferential sipe may be disposed to intersect the first width direction groove portion 3A so that opposite ends of the circumferential sipe 5 terminate in the shoulder land portion 4S.

Furthermore, as illustrated in FIG. 7, the shoulder land portion 4S further includes a width direction sipe 6 that extends in the tire width direction and does not communicate with a circumferential groove 2. It is preferable that the width direction sipe 6 does not intersect the width direction groove 3, and is disposed away from the width direction groove 3 via a space in the tire circumferential direction. Furthermore, the sipes are arranged alternately with the width direction grooves 3 in the tire circumferential direction, and the sipe is disposed to overlap with the second width direction groove portion 3B when seen in the tire circumferential direction.

In a land portion block divided by the width direction groove 3 in the shoulder land portion 4S, there is a tendency that rigidity of the land portion block relatively increases in a tire width direction region corresponding to a tire width direction extending region of the second width direction groove portion 3B. To solve the problem, the width direction sipe 6 is disposed away from the width direction groove 3 via the space in the tire circumferential direction and alternately with the width direction groove 3 in the tire circumferential direction, and is disposed to overlap with the second width direction groove portion 3B when seen in the tire circumferential direction. In this case, the block rigidity of the tire width direction region corresponding to the tire extending region of the second width direction groove portion 3B can be appropriately decreased, and compression rigidities in respective blocks divided by the width direction grooves 3 can be closely uniformly balanced.

Furthermore, it is preferable that at least a part of the width direction sipe 6 in a sipe depth direction is formed in a zigzag shape in the tire circumferential direction. Specifically, it is preferable that at least a part of the width direction sipe 6 in the depth direction extends with two or more bending points.

In this case, at a position of the width direction sipe 6, the rigidities in the respective blocks divided by the width direction grooves 3 can be inhibited from being excessively decreased.

Additionally, it is preferable that the width direction sipe 6 includes a normal line direction extending region that extends along a normal line direction of the tread surface T on a tread surface T side of the width direction sipe 6, and includes a bend region that extends with two or more bending points on an inner side of the normal line direction extending region in the normal line direction.

Note that the tire 50 illustrated in FIGS. 7 to 9 has a configuration similar to the tire 10 according to the embodiment illustrated in FIGS. 1 and 2, except that the tire includes the circumferential sipe 5 and the width direction sipe 6.

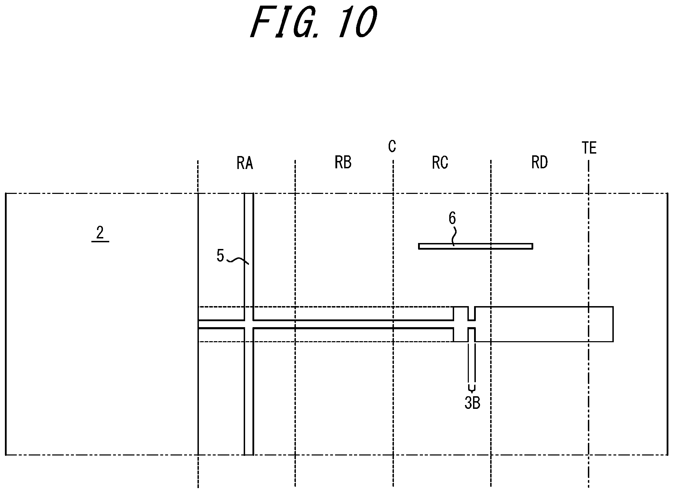

Furthermore, as illustrated in FIG. 10, it is preferable that the second width direction groove portion 3B is provided in a tire width direction region RD on an outermost side in the tire width direction, or a second tire width direction region RC from the outer side in the tire width direction among four tire width direction regions RA, RB, RC, and RD formed by dividing, into four equal regions, a tire widthwise distance between a tire width direction inner end of the width direction groove 3 and a tread ground contact edge TE.

Here, "the second width direction groove portion 3B is provided in the region RC or the region RD" indicates that the whole second width direction groove portion 3B is included (fits) in the region RC or the region RD.

In a case where the whole second width direction groove portion 3B is provided in the region RC or the region RD, as compared with a case where at least a part of the second width direction groove portion 3B is provided on an inner side of the region RC in the tire width direction, air flow can be more sufficiently acquired in the first width direction groove portion 3A on a circumferential groove 2 side of the second width direction groove portion 3B, and air flowing into the second width direction groove portion 3B flows at a higher rate. Consequently, an attenuation effect by viscosity increases, and the air column resonance sound can be further reduced.

Furthermore, it is preferable from a similar viewpoint that the second width direction groove portion 3B is provided in the tire width direction region RC.

Here, "the second width direction groove portion 3B is provided in the region RC" indicates that the whole second width direction groove portion 3B is included (fits) in the region RC.

In this case, the reason is that the second width direction groove portion 3B is almost always located in a contact patch of the tread during rolling of the tire and that a reduction effect of the air column resonance sound by the second width direction groove portion 3B can be more securely obtained.

Additionally, when the second width direction groove portion 3B is disposed as described above, it is preferable that the intersecting portion E of the first width direction groove portion 3A is provided on a tire width direction inner side of a midpoint C between the tire width direction inner end of the width direction groove 3 and the tread ground contact edge TE.

Note that the position at which the second width direction groove portion 3B is disposed as described with reference to FIG. 10 also applies to the other embodiments.

Furthermore, it is preferable that at least a part of each of surfaces of opposite groove walls of the second width direction groove portion 3B is subjected to uneven processing so that the surface has an arithmetic mean roughness Ra of 1.0 $\mu$m or more and 5.0 $\mu$m or less. In this case, the reason is that energy loss in the second width direction groove portion 3B increases and that the air column resonance sound can be further reduced. Note that "the arithmetic mean roughness Ra" is "an arithmetic mean roughness Ra" prescribed in JIS B 0601 (2001), and obtained with a unit length of 10 mm.

Additionally, it is preferable that an extending length of the second width direction groove portion 3B is 1.0 mm or more and 3.0 mm or less.

If the length is 1.0 mm or more, an extending length of the first width direction groove portion 3A and/or a third width direction groove portion 3C relatively shortens, and hence, excessive drop in rigidity of the shoulder land portion 4S can be inhibited. Furthermore, an attenuation effect of sound waves in the second width direction groove portion 3B is not especially proportional to the extending length of the second width direction groove portion 3B, and hence, it is sufficient that the length is 3.0 mm or less.

It is also preferable in the tire of the present invention that two or more width direction grooves 3 each comprising the first width direction groove portion 3A including the narrowed groove portion 3a and the second width direction groove portion 3B are arranged in the contact patch of the tire (the patch that comes in contact with a road surface in a maximum load state), and it is more preferable to arrange four or more width direction grooves. Note that the attenuation effect of the air column resonance sound by the second width direction groove portion 3B is proportional to the number of the width direction grooves 3 having the second width direction groove portions 3B to be arranged, and from a viewpoint of inhibiting the excessive drop in rigidity of the shoulder land portion 4S, it is preferable that the number is six or less.

Furthermore, in the tire of the present invention, the width direction groove 3 comprising the first width direction groove portion 3A including the narrowed groove portion 3a and the second width direction groove portion 3B may be provided only in one half portion with the tire equatorial plane TC of the tread surface T as a boundary (e.g., the half portion on an installation outer side of the tire having an installing direction to the vehicle designated).

Further in each embodiment, the shoulder land portion 4S may not comprise the third width direction groove portion 3C, and the second width direction groove portion 3B may communicate directly with the tread ground contact edge TE.

Note that in the above described examples, any grooves, sipes or the like are not provided in the center land portion 4C and the middle land portion 4M, but various grooves, sipes or the like may be optionally provided in accordance with a desired tire performance.

Reference Signs List

| | |
|---|---|
| 1 | tread |
| 2 | circumferential groove |
| 3 | width direction groove |
| 3A | first width direction groove portion |
| 3a | narrowed groove portion |
| 3B | second width direction groove portion |
| 3C | third width direction groove portion |
| 4C | center land portion |
| 4M | middle land portion |
| 4S | shoulder land portion |
| 5 | circumferential sipe |
| 6 | width direction sipe |
| 10, 20, 30, 40, and 50 | tire |
| E | intersecting portion |
| T | tread surface |
| TC | tire equatorial plane |
| TE | tread ground contact edge |
| W1 | groove width of the circumferential sipe |
| W2 | groove width of the first width direction groove portion |
| W2a | groove width (on a groove bottom side) of the narrowed groove portion |
| W2b | opening width of the narrowed groove portion (in the tread surface) |

| W3 | groove width of the second width direction groove portion |
| W4 | groove width of the third width direction groove portion |
| W5 | sipe width of the circumferential sipe |

**Claims**

1. A tire (10) comprising, in a tread surface (T), at least a circumferential groove (2) extending continuously in a tire circumferential direction, and a shoulder land portion (4S) defined by the circumferential groove (2) on an outermost side in a tire width direction and a tread ground contact edge (TE), wherein

   the shoulder land portion (4S) includes a width direction groove (3) that extends in the tire width direction and communicates between the circumferential groove (2) and the tread ground contact edge (TE),
   the width direction groove (3) comprises a first width direction groove portion (3A) that communicates with the circumferential groove (2) and opens to the tread surface (T), and a second width direction groove portion (3B) adjacent to and continuous with a tread ground contact edge side of the first width direction groove portion (3A) and opens to the tread surface (T),
   the first width direction groove portion (3A) includes a narrowed groove portion (3a) having an opening width (W2b) in the tread surface (T) that is smaller than a groove width (W2a) on a groove bottom side, in a region of at least a part of the first width direction groove portion (3A) in an extending direction of the first width direction groove portion (3A), and
   respective groove widths (W1, W2, W3), which are opening widths in the tread surface (T), of the circumferential groove (2), the first width direction groove portion (3A) and the second width direction groove portion (3B) satisfy a relational expression (1) as follows:

   $$\text{the groove width (W1) of the circumferential groove (2)} > \text{the groove width (W2) of the first width direction groove portion (3A)} > \text{the groove width (W3) of the second width direction groove portion (3B)} \dots (1).$$

2. The tire (10) according to claim 1, wherein the shoulder land portion (4S) further includes a circumferential sipe (5) extending in the tire circumferential direction, and
   a sipe width (W5) of the circumferential sipe (5), and respective groove widths (W2, W3) of the first width direction groove portion (3A) and the second width direction groove portion (3B) satisfy a relational expression (2) as follows:

   $$\text{the groove width (W2) of the first width direction groove portion (3A)} > \text{the sipe width (W5) of the circumferential sipe (5)} > \text{the groove width (W3) of the second width direction groove portion (3B)} \dots (2).$$

3. The tire (10) according to claim 1, wherein the width direction groove (3) further comprises a third width direction groove portion (3C) that is adjacent to and continuous with a tread ground contact edge side of the second width direction groove portion (3B), and communicates with the tread ground contact edge (TE) and opens to the tread surface (T),
   respective groove widths (W3, W4), which are opening widths in the tread surface (T), of the second width direction groove portion (3B) and the third width direction groove portion (3C) satisfy a relational expression (3) as follows:

   $$\text{the groove width (W4) of the third width direction groove portion (3C)} > \text{the groove width (W3) of the second width direction groove portion (3B)} \dots (3).$$

4. The tire (10) according to claim 3, wherein respective groove widths (W2, W4), which are opening widths in the tread surface (T), of the first width direction groove portion (3A) and the third width direction groove portion (3C) satisfy a relational expression (4) as follows:

$$\text{the groove width (W4) of the third width direction groove portion}$$
$$\text{(3C)} > \text{the groove width (W2) of the first width direction groove portion}$$
$$\text{(3A) ... (4).}$$

**5.** The tire (10) according to claim 1, wherein the second width direction groove portion (3B) is provided in a second tire width direction region (RC) from an outer side in the tire width direction among four tire width direction regions (RA, RB, RC, RD) formed by dividing, into four equal regions, a tire (10) widthwise distance between a tire width direction inner end of the width direction groove (3) and the tread ground contact edge (TE), and
the intersecting portion (E) of the first width direction groove portion (3A) is provided on a tire width direction inner side of a midpoint (C) between the tire width direction inner end of the width direction groove (3) and the tread ground contact edge (TE).

**Patentansprüche**

**1.** Reifen (10), der, in einer Lauffläche (T), mindestens eine umlaufende Rille (2), die sich durchgehend in einer Reifenumfangsrichtung erstreckt, und einen Schulterstegabschnitt (4S), der durch die umlaufende Rille (2) auf einer in einer Reifenbreitenrichtung äußersten Seite definiert wird, und eine Laufflächen-Bodenberührungskante (TE) umfasst, wobei

der Schulterstegabschnitt (4S) eine Breitenrichtungsrille (3) einschließt, die sich in der Reifenbreitenrichtung erstreckt und zwischen der umlaufenden Rille (2) und der Laufflächen-Bodenberührungskante (TE) kommuniziert,
die Breitenrichtungsrille (3) einen ersten Breitenrichtungsrillen-Abschnitt (3A), der mit der umlaufenden Rille (2) kommuniziert und sich zu der Lauffläche (T) öffnet, und einen zweiten Breitenrichtungsrillen-Abschnitt (3B), der zu mit einer Laufflächen-Bodenberührungskantenseite des ersten Breitenrichtungsrillen-Abschnitts (3A) benachbart und mit derselben durchgehend ist und sich zu der Lauffläche (T) öffnet, umfasst,
der erste Breitenrichtungsrillen-Abschnitt (3A) einen verengten Rillenabschnitt (3a), der eine Öffnungsbreite (W2b) in der Lauffläche (T) aufweist, die kleiner ist als eine Rillenbreite (W2a) auf einer Rillensohlenseite, in einem Bereich von zumindest einem Teil des ersten Breitenrichtungsrillen-Abschnitts (3A) in einer Ausdehnungsrichtung des ersten Breitenrichtungsrillen-Abschnitts (3A) einschließt, und
jeweilige Rillenbreiten (W1, W2, W3), die Öffnungsbreiten in der Lauffläche (T) sind, der umlaufenden Rille (2), des ersten Breitenrichtungsrillen-Abschnitts (3A) und des zweiten Breitenrichtungsrillen-Abschnitts (3B) einen Vergleichsausdruck (1), wie folgt, erfüllen:

$$\text{die Rillenbreite (W1) der umlaufenden Rille (2)} > \text{die Rillenbreite (W2) des ersten Breitenrichtungsrillen-Abschnitts (3A)} > \text{die Rillenbreite (W3) des zweiten Breitenrichtungsrillen-Abschnitts (3B) ... (1).}$$

**2.** Reifen (10) nach Anspruch 1, wobei der Schulterstegabschnitt (4S) ferner eine umlaufende Lamelle (5) einschließt, die sich in der Reifenumfangsrichtung erstreckt, und
eine Lamellenbreite (W5) der umlaufenden Lamelle (5) und jeweilige Rillenbreiten (W2, W3) des ersten Breitenrichtungsrillen-Abschnitts (3A) und des zweiten Breitenrichtungsrillen-Abschnitts (3B) einen Vergleichsausdruck (2), wie folgt, erfüllen:

$$\text{die Rillenbreite (W2) des ersten Breitenrichtungsrillen-Abschnitts (3A)} > \text{die Lamellenbreite (W5) der umlaufenden Lamelle (5)} > \text{die Rillenbreite (W3) des zweiten Breitenrichtungsrillen-Abschnitts (3B) ... (2).}$$

**3.** Reifen (10) nach Anspruch 1, wobei die Breitenrichtungsrille (3) ferner einen dritten Breitenrichtungsrillen-Abschnitt (3C), der zu einer Laufflächen-Bodenberührungskantenseite des zweiten Breitenrichtungsrillen-Abschnitts (3B) benachbart und mit derselben durchgehend ist und mit der Laufflächen-Bodenberührungskante (TE) kommuniziert

und sich zu der Lauffläche (T) öffnet, umfasst,
jeweilige Rillenbreiten (W3, W4), die Öffnungsbreiten in der Lauffläche (T) sind, des zweiten Breitenrichtungsrillen-Abschnitts (3B) und des dritten Breitenrichtungsrillen-Abschnitts (3C) einen Vergleichsausdruck (3), wie folgt, erfüllen:

$$\text{die Rillenbreite (W4) des dritten Breitenrichtungsrillen-Abschnitts (3C)} > \text{die Rillenbreite (W3) des zweiten Breitenrichtungsrillen-Abschnitts (3B)} \dots (3).$$

4. Reifen (10) nach Anspruch 3, wobei jeweilige Rillenbreiten (W2, W4), die Öffnungsbreiten in der Lauffläche (T) sind, des ersten Breitenrichtungsrillen-Abschnitts (3A) und des dritten Breitenrichtungsrillen-Abschnitts (3C) einen Vergleichsausdruck (4), wie folgt, erfüllen:

$$\text{die Rillenbreite (W4) des dritten Breitenrichtungsrillen-Abschnitts (3C)} > \text{die Rillenbreite (W2) des ersten Breitenrichtungsrillen-Abschnitts (3A)} \dots (4).$$

5. Reifen (10) nach Anspruch 1, wobei der zweite Breitenrichtungsrillen-Abschnitt (3B) in einem zweiten Reifenbreitenrichtungsbereich (RC) von einer in der Reifenbreitenrichtung äußeren Seite unter vier Reifenbreitenrichtungsbereichen (RA, RB, RC, RD) bereitgestellt wird, die durch Teilen eines Abstands in der Breite des Reifens (10) zwischen einem in Reifenbreitenrichtung inneren Ende der Breitenrichtungsrille (3) und der Laufflächen-Bodenberührungskante (TE), in vier gleiche Bereiche, geformt sind, und
der überschneidende Abschnitt (E) des ersten Breitenrichtungsrillen-Abschnitts (3A) auf einer in Reifenbreitenrichtung inneren Seite eines Mittelpunkts (C) zwischen dem in Reifenbreitenrichtung inneren Ende der Breitenrichtungsrille (3) und der Laufflächen-Bodenberührungskante (TE) bereitgestellt wird.

**Revendications**

1. Bandage pneumatique (10), comprenant, dans une surface de bande de roulement (T) au moins une rainure circonférentielle (2) s'étendant en continu dans une direction circonférentielle du bandage pneumatique, et une partie d'appui d'épaulement (4S) définie par la rainure circonférentielle (2) sur un côté externe extrême, dans une direction de la largeur du bandage pneumatique, et un bord de contact au sol de la bande de roulement (TE), dans lequel :

la partie d'appui d'épaulement (4S) inclut une rainure dans la direction de la largeur (3) qui s'étend dans la direction de la largeur du bandage pneumatique et établit une communication entre la rainure circonférentielle (2) et le bord de contact au sol de la bande de roulement (TE) ;
la rainure dans la direction de la largeur (3) comprend une première partie de rainure dans la direction de la largeur (3A) en communication avec la rainure circonférentielle (2) et ouverte vers la surface de bande de roulement (T), et une deuxième partie de rainure dans la direction de la largeur (3B) adjacente à et continue avec un côté du bord de contact au sol de la bande de roulement de la première partie de rainure dans la direction et la largeur (3A) et ouverte vers la surface de bande de roulement (T) ;
la première partie de rainure dans la direction de la largeur (3A) inclut une partie de rainure rétrécie (3a) ayant une largeur d'ouverture (W2b) dans la surface de bande de roulement (T) qui est inférieure à une largeur de rainure (W2a) sur un côté du fond de la rainure, dans une région d'au moins une partie de la première partie de rainure dans la direction de la largeur (3A), dans une direction d'extension de la première partie de rainure dans la direction de la largeur (3A) ; et
des largeurs d'ouverture respectives (W1, W2, W3), constituant des largeurs d'ouverture dans la surface de bande de roulement (T), de la rainure circonférentielle (2), de la première partie de rainure dans la direction de la largeur (3A) et de la deuxième partie de rainure dans la direction de la largeur (3B), satisfont la relation (1) suivante :

$$\text{la largeur de rainure (W1) de la rainure circonférentielle (2)} > \text{la largeur de rainure (W2) de la première partie de rainure dans la direction de la largeur (3A)} > \text{la largeur de rainure (W3) de la deuxième partie de rainure dans la direction de la largeur (3B)} \dots (1).$$

**2.** Bandage pneumatique (10) selon la revendication 1, dans lequel la partie d'appui d'épaulement (4S) inclut en outre une lamelle circonférentielle (5) s'étendant dans la direction circonférentielle du bandage pneumatique ; et une largeur de lamelle (W5) de la lamelle circonférentielle (5) et des largeurs de rainure respectives (W2, W3) de la première partie de rainure dans la direction de la largeur (3A) et de la deuxième partie de rainure dans la direction de la largeur (3B) satisfont la relation (2) suivante :

$$\text{la largeur de rainure (W2) de la première partie de rainure dans la direction de la largeur (3A)} > \text{la largeur de lamelle (W5) de la lamelle circonférentielle (5)} > \text{la largeur de rainure (W3) de la deuxième partie de rainure dans la direction de la largeur (3B)} \dots (2).$$

**3.** Bandage pneumatique selon la revendication 1, dans lequel la rainure dans la direction de la largeur (3) comprend en outre une troisième partie de rainure dans la direction de la largeur (3C) qui est adjacente à et continue avec un côté du bord de contact au sol de la bande de roulement de la deuxième partie de rainure dans la direction de la largeur (3B), et communique avec le bord de contact au sol de la bande de roulement (TE) et est ouverte vers la surface de bande de roulement (T);
des largeurs de rainure respectives (W3, W4), constituant des largeurs d'ouverture dans la surface de bande de roulement (T) de la deuxième partie de rainure dans la direction de la largeur (3B) et de la troisième partie de rainure dans la direction de la largeur (3C) satisfont la relation (3) suivante :

$$\text{la largeur de rainure (W4) de la troisième partie de rainure dans la direction de la largeur (3C)} > \text{la largeur de rainure (W3) de la deuxième partie de rainure dans la direction de la largeur (3B)} \dots (3).$$

**4.** Bandage pneumatique (10) selon la revendication 3, dans lequel des largeurs de rainure respectives (W2, W4), constituant des largeurs d'ouverture dans la surface de bande de roulement (T) de la première partie de rainure dans la direction de la largeur (3A) et de la troisième partie de rainure dans la direction de la largeur (3C) satisfont la relation (4) suivante :

$$\text{la largeur de rainure (W4) de la troisième partie de rainure dans la direction de la largeur (3C)} > \text{la largeur de rainure (W2) de la première partie de rainure dans la direction de la largeur (3A)} \dots (4).$$

**5.** Bandage pneumatique (10) selon la revendication 1, dans lequel la deuxième partie de rainure dans la direction de la largeur (3B) est fournie dans une deuxième région, dans la direction de la largeur du bandage pneumatique (RC), à partir d'un côté externe, dans la direction de la largeur du bandage pneumatique, parmi quatre régions dans la direction de la largeur de bandage pneumatique (RA, RB, RC, RD) formées en divisant, en quatre régions égales, une distance dans le sens de la largeur du bandage pneumatique (10), entre une extrémité interne, dans la direction de la largeur du bandage pneumatique, de la rainure dans la direction de la largeur (3) et un bord de contact au sol de la bande de roulement (TE) ; et
la partie d'intersection (E) de la première partie de rainure dans la direction de la largeur (3A) est fournie sur un côté interne, dans une direction de la largeur du bandage pneumatique, d'un point médian (C) entre l'extrémité interne, dans la direction de la largeur du bandage pneumatique, de la rainure dans la direction de la largeur du bandage pneumatique (3) et le bord de contact au sol de la bande de roulement (TE).

# FIG. 1

*FIG. 2*

EP 3 659 826 B1

# FIG. 3A

# FIG. 3B

FIG. 4

EP 3 659 826 B1

# FIG. 5

FIG. 6

# FIG. 7

EP 3 659 826 B1

# FIG. 8

EP 3 659 826 B1

## FIG. 9A

## FIG. 9B

EP 3 659 826 B1

# FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015214303 A
- JP 2011051529 A
- JP 2014166827 A